(19) Europäisches Patentamt
European Patent Office
Office européen des brevets

(11) Veröffentlichungsnummer : **0 067 439**
**B1**

(12) # EUROPÄISCHE PATENTSCHRIFT

(45) Veröffentlichungstag der Patentschrift : **03.04.85**

(51) Int. Cl.⁴ : **C 01 B 4/00**, B 01 D 59/32

(21) Anmeldenummer : **82105195.0**

(22) Anmeldetag : **12.06.82**

(54) **Verfahren und Vorrichtung zur stufenweisen Anreicherung von Deuterium und/oder Tritium in einem für den Isotopenaustausch von Deuterium und Tritium mit Wasserstoff geeigneten Stoff.**

(30) Priorität : **16.06.81 DE 3123860**

(43) Veröffentlichungstag der Anmeldung : **22.12.82 Patentblatt 82/51**

(45) Bekanntmachung des Hinweises auf die Patenterteilung : **03.04.85 Patentblatt 85/14**

(84) Benannte Vertragsstaaten : **AT BE CH FR GB IT LI LU NL SE**

(56) Entgegenhaltungen :
**US-A- 2 690 379**
**US-A- 3 981 976**
**CHEMIE. INGENIEUR. TECHNIK, Band 52, Nr. 11 1980, Weinheim H.J. FIEK et al. "Tritium-Anreicherung durch Isotopen-Austausch zwischen Wasserstoff und Wasser mittels hydrophoben Katalysators für die Kernbrennstoff-Wiederaufbereitung" Seiten 892 bis 895**

(73) Patentinhaber : **Kernforschungsanlage Jülich Gesellschaft mit beschränkter Haftung**
**Postfach 1913**
**D-5170 Jülich (DE)**

(72) Erfinder : **Iniotakis, Nicolaos**
**Kopernikusstrasse 64**
**D-5170 Jülich (DE)**
Erfinder : **von der Decken, Claus-Benedict, Prof. Dr.**
**Dammstrasse 37**
**D-5100 Aachen (DE)**

**EP 0 067 439 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Verfahren zur stufenweisen Anreicherung von Deuterium und/oder Tritium in einem für den Isotopenaustausch von Deuterium und Tritium mit Wasserstoff geeigneten Stoff sowie auf eine Vorrichtung zur Durchführung des Verfahrens.

Die Erzeugung von Deuterium, $D_2$, und Tritium, $T_2$, ist nicht nur für die Kernfusionstechnologie von Bedeutung, bei der Deuterium und Tritium als « Brennstoffe » dienen und unter Abgabe von Energie zu Helium verschmolzen werden. Bekannt ist die Verwendung von Deuterium auch bei Schwerwasser moderierten Kernreaktoren, bei denen $D_2O$ als Moderator eingesetzt ist. Tritium wird für die Herstellung von Leuchtpigmenten beispielsweise für Leuchtfarben sowie als Komponente für die Gasfüllung in Leuchtstoffröhren und bei der Herstellung von Überspannungsableitern angewendet. Auch zur Strahlenmodulation in Teilchenbeschleunigern wird Tritium als Target eingesetzt. Tritium dient darüber hinaus zur Markierung von chemischen Verbindungen, beispielsweise in der Biochemie.

Deuterium ist in natürlichem Wasserstoff und im Wasser mit 0,015 At% enthalten, im Wasserstoff überwiegend als HD, in Wasser in Form von HDO. Tritium ist im natürlichen Wasserstoff nur in verschwindend geringer Konzentration vorhanden, es fällt jedoch beispielsweise als Nebenprodukt beim Betrieb von Kernreaktoranlagen, insbesondere bei Schwerwasserreaktoren und Hochtemperaturreaktoren sowie bei der Wiederaufarbeitung von agbebrannten Kernbrennelementen an. Da das Tritium radioaktiv ist und in Form von HTO unmittelbar in den Biozyklus aufgenommen wird, können selbst geringe Tritiummengen, die bei der Entsorgung von Kernreaktoranlagen entstehen, nicht unbeachtet bleiben. Zur Entsorgung des anfallenden Tritiums ist es bekannt, Tritium in Wasser anzureichern und zu binden.

Zur Anreicherung von Deuterium oder Tritium in Wasserstoff und Wasser sind verschiedene Verfahren bekannt, siehe hierzu K. M. Mackay et al., « Deuterium and Tritium », in « Comprehensive Inorganic Chemistry », volum I, Pergamon Press, New York, 1973, Seiten 77 bis 84, sowie NUKEM 500, « Herkunft, Handhabung und Verbleib von Tritium », RSI-510 321/196 - SR 165, Februar 1980. Eine Anreicherung wird beispielsweise durch Destillation flüssigen Wasserstoffs bei einer Temperatur von etwa 23 K oder durch Destillation von Wasser bei 70 °C und Unterdruck erreicht. Als Verfahren mit einem hohem Trennfaktor ist die Wasserelektrolyse bekannt, zu deren Durchführung jedoch in gleicher Weise wie bei der Destillation von Wasserstoff neben der Erfüllung erhöhter Sicherheitsanforderungen (hohe Dichtigkeit, Explosionsschutz) auch ein erheblicher Energiebedarf bezogen auf die angereicherte Deuterium- oder Tritiummenge zu decken ist. Letzteres ist vorallem deshalb der Fall, weil von einer niedrigen Ausgangskonzentration von Deuterium und Tritium im Wasser ausgegangen werden muß. Bekannt sind daneben auch Verfahren, bei denen durch Isotopenaustausch in flüssiger Phase Deuterium und Tritium in Wasser angereichert werden, siehe H. J. Fiek et al., « Tritium-Anreicherung durch Isotopenaustausch zwischen Wasserstoff und Wasser, mittels hydrophoben Katalysators für die Kernbrennstoff-Wiederaufbereitung », Chem.-Ing.-Techn. 52, 1980, Seiten 892 bis 895. Die Austauschgeschwindigkeiten sind jedoch bei einem solchen Verfahren auch bei Anwendung von Katalysatoren verhältnismäßig gering. Hinzu kommt, daß bisher bekannte Katalysatoren eine hohe Störanfälligkeit aufweisen.

Eine Schwerwassergewinnung unter Verwendung von Ammoniak, $NH_3$, ist in KWU-Report, Nr. 32, April 1980, Seite 9, erwähnt. Das Schwerwasser wird durch monothermen Ammoniak-Wasserstoff-Isotopenaustausch gewonnen. Nachteilig sind bei einem solchen Verfahren der hohe Energiebedarf, der insbesondere bei der angewandten elektrolytischen Ammoniakspaltung entsteht und für die nachfolgende Ammoniaksynthese erforderlich ist. Auch bleibt die Ausbeute für ausgetauschtes Deuterium beim Ammoniak-Wasser-Isotopenaustausch gering.

Aufgabe der Erfindung ist es, ein Verfahren zur Anreicherung von Deuterium und/oder Tritium in Wasser zu schaffen, das neben einer hohen Transportgeschwindigkeit für die am Isotopenaustausch beteiligten Molekeln einen hohen Anreicherungsfaktor pro Anreicherungsstufe und eine hohe Ausbeute aufweist, so daß bei verhältnismäßig kleiner Stufenzahl und niedrigem Energieverbrauch ein insgesamt hoher Anreicherungsgrad erreichbar ist.

Diese Aufgabe der Erfindung wird bei einem Verfahren der eingangs genannten Art gemäß der Erfindung durch die im Anspruch 1 angegebenen Maßnahmen gelöst. Danach wird pro Anreicherungsstufe Deuterium und/oder Tritium enthaltendes Wasser in einen Trägergasstrom eingeführt, reduziert und auf einen Wasserstoff ($H_2$)-Partialdruck von maximal 100 mbar eingestellt. Im Anschluß daran wird der Trägergasstrom primärseitig an einer für die Permeation von Wasserstoff geeigneten Austauschwand entlanggeführt, auf deren Sekundärseite ein weiterer Trägergasstrom strömt, der den für den Isotopenaustausch von Deuterium und Tritium mit Wasserstoff geeigneten Stoff, in dessen Gasphase überführt, enthält. Die durch die Austauschwand permeierenden Wasserstoffisotope Deuterium und/oder Tritium werden nach Isotopenaustausch mit dem Stoff im Reaktionsprodukt gebunden. Als Trägergas wird primärseitig der Austauschwand ein die Reduktion des Wassers, sekundärseitig ein den Isotopenaustausch nicht störend beeinflussendes Gas, beispielsweise ein Inertgas wie Helium oder Argon verwendet. Für den Isotopenaustausch ist vom sekundärseitigen Trägergasstrom eine Stoffmenge pro Zeiteinheit mitzuführen, die zumindest um das für die Permeation von Deuterium und/oder Tritium

erforderliche Konzentrationsgefälle zwischen Primär- und Sekundärseite der Austauschwand größer ist als die primärseitig im Trägergasstrom strömende Wasserstoffmenge pro Zeiteinheit dividiert durch die Gleichgewichtskonstante der für den Isotopenaustausch maßgebenden Reaktionsgleichung. Unter Konzentrationsgefälle wird hier das Verhältnis von Partialdruck der Molekeln HD oder HT auf der Primärseite zum Partialdruck der gleichen Molekeln HD oder HT auf der Sekundärseite der Austauschwand verstanden. Soll im zugegebenen Stoff, Deuterium und Tritium zugleich angereichert werden, ist für diesen Fall zur Bestimmung der zumindest einzuführenden Stoffmenge die jeweils kleinere Gleichgewichtskonstante der für den Isotopenaustausch von Deuterium mit Wasserstoff oder Tritium mit Wasserstoff maßgebenden Reaktionen zu berücksichtigen. Die in den sekundärseitigen Trägergasstrom einzuführende Stoffmenge ist jedoch stets kleiner zu bemessen, als die pro Zeiteinheit in den Trägergasstrom auf der Primärseite der Austauschwand nach Reduktion des Wassers mitgeführte Wasserstoffmenge pro Zeiteinheit. Die durch Isotopenaustausch mit den Stoff entstandenen Reaktionsprodukte werden vom Trägergas von der Sekundärseite der Austauschwand abgeführt.

In vorteilhafter Weise findet beim erfindungsgemäßen Verfahren der Isotopenaustausch überwiegend auf der Oberfläche der Austauschwand statt, so daß bei hohen Transportgeschwindigkeiten der Molekeln an die Wand, wie sie in der Gasphase auftreten, der gewünschte Isotopenaustausch begünstigt wird. Dabei sorgt die Austauschwand, durch die die Wasserstoffisotope permeieren, zugleich für eine Trennung zwischen nieder- und hochangereicherter Gasfraktion. Die Austauschwand weist für die Atomisierung der Molekeln eine katalytische Wirkung auf. Durch Einstellen eines Wasserstoff($H_2$)-Partialdruckes von maximal 100 mbar im primärseitigen Trägergasstrom ist die Permeation durch die Austauschwand auch über längere Betriebszeiten aufrecht zu erhalten. Die benötigte Energie pro Anreicherungsstufe ist verhältnismäßig gering. Für die Aufheizung des Trägergasstromes kann die exotherme Reaktion des in den Trägergasstrom eingeführten Wassers genutzt werden.

Als Stoff für den Isotopenaustausch mit dem durch die Austauschwand permeierenden Wasserstoff-Deuterium-Tritium-Gemisch ist vorallem Wasser bzw. Wasserdampf geeignet. Für den Isotopenaustausch läßt sich neben oder statt bevorzugt verwendeten Wassers beispielsweise auch Ammoniak, $NH_3$, oder Schwefelwasserstoff, $H_2S$, einsetzen. Der auf der Sekundärseite der Austauschwand für den Isotopenaustausch zugegebene Stoff enthält dann überwiegend das Wasserstoffisotop H, so daß für Wasserstoff im Gegensatz zu den zu bindenden Wasserstoffisotopen Deuterium und/oder Tritium ein Konzentrationsgleichgewicht auf beiden Seiten der Austauschwand besteht.

Bei Zugabe von Wasser bildet sich beispielsweise aus HT und HD gemäß den Reaktionen

$$HT + H_2O \rightleftharpoons HTO + H_2 \qquad (1)$$
$$HD + H_2O \rightleftharpoons HDO + H_2 \qquad (2)$$

HTO und HDO, wobei durch Erhöhen des $H_2O$-Partialdruckes im Trägergas der Übergang von HT in HTO und HD in HDO begünstigt wird. Für die Bestimmung der in den Trägergasstrom sekundärseitig einzuführenden Mindestwassermenge sind die Gleichgewichtskonstanten beider Reaktion zu berücksichtigen, für die Anreicherung von Tritium die Gleichgewichtskonstanten der vorgenannten Gleichung (1), für die Anreicherung von Deuterium die Gleichgewichtskonstante der vorgenannten Gleichung (2). Soll sowohl Deuterium als auch Tritium im Wasser angereichert werden, ist für diesen Fall die kleinere Gleichgewichtskonstante der Gleichungen maßgebend, die den Isotopenaustausch bestimmen. Die in den Trägergasstrom auf der Sekundärseite eingeführte Wassermenge ist jedoch stets geringer zu halten, als die im primärseitigen Trägergasstrom enthaltene Wasserstoffmenge, um eine Anreicherung zu erreichen. Bei Verwendung von Wasser als Stoff für den Isotopenaustausch im sekundärseitig strömenden Trägergas wird als Betriebstemperatur jeder Austauschstufe eine Temperatur im Temperaturbereich zwischen 100 und 300 °C eingestellt. In diesem Temperaturbereich weisen die Gleichgewichtskonstanten für den Isotopenaustausch mit Wasserdampf günstige Werte auf. Die Gleichgewichtskonstante für den Isotopenaustausch von Tritium mit Wasserstoff beträgt beispielsweise bei 120 °C ca. $K = 3{,}6$ und von Deuterium mit Wasserstoff bei der gleichen Temperatur ca. $K = 2{,}46$. Soll für diesen Fall Deuterium und Tritium im Wasser angereichert werden, so ist für die Bestimmung der dem sekundärseitigen Trägergasstrom zumindest zuzuführenden Wassermenge die Gleichgewichtskonstante für den Isotopenaustausch zwischen Deuterium und Wasserstoff maßgebend.

Wasserstoff, $H_2$, ist sowohl primär- als auch sekundärseitig der Austauschwand mit gleichem Partialdruck im Gas enthalten. Es wird somit aus dem Trägergasstrom auf der Primärseite nicht entfernt. Auf der Sekundärseite der Austauschwand entstehen die auf der rechten Seite der vorgenannten Gleichungen (1) und (2) aufgeführten Reaktionsprodukte. Sie werden vom sekundärseitigen Trägergas weggeführt. Das Trägergas strömt dann in die nächste Austauschstufe als primärseitiger Trägergasstrom ein. In dieser Austauschstufe werden die Reaktionsprodukte — bei Verwendung von Wasser zum Isotopenaustausch also mit Deuterium und/oder Tritium angereichertes Wasser — im gleicher Weise wie in der ersten Anreichungsstufe zunächst reduziert, wobei im Trägergas erneut für Wasserstoff ein Partialdruck von maximal 100 mbar eingestellt wird. Das Trägergas wird dann primärseitig an der Austauschwand der weiteren Anreicherungsstufe entlanggeführt. Die Wasserstoffisotope Deuterium und/oder Tritium permeieren zur Sekundärseite der Austauschwand und reagieren hier weitgehend bereits auf der Oberfläche der Austauschwand mit dem auf dieser Seite der Austauschwand im Trägergas

geführten Stoff durch Isotopenaustausch. Die Reaktionsprodukte werden vom Trägergas abgeführt.

Weitere Ausbildungen des erfindungsgemäßen Verfahrens sind in Ansprüchen 4 bis 15 angegeben. Danach werden der Trägergasstrom auf der Primärseite der Austauschwand und der Trägergasstrom auf der Sekundärseite der Austauschwand im Gegenstrom geführt, um für die Permeation ausreichende Konzentrationsdifferenzen auf beiden Seiten der Austauschwand zu erreichen. Als Trägergas auf der Sekundärseite wird bevorzugt das auch auf der Primärseite der Austauschwand strömende Trägergas verwendet. Das Trägergas läßt sich für diesen Fall in vorteilhafter Weise aus dem primärseitig der Austauschwand geführten Trägergasstrom entnehmen, sobald dieser nach Permeation des Deuteriums und/oder Tritiums von der Austauschwand abströmt. Es wird ein Teil des primärseitig strömenden Trägergases entnommen und unter Zugabe des für den Isotopenaustausch geeigneten Stoffes zur Sekundärseite der Austauschwand geführt. Mit dieser Maßnahme erreicht man zugleich einen Druckausgleich auf beiden Seiten der Austauschwand — bis auf einen geringen Unterdruck auf der Sekundärseite, der im wesentlichen dem Druckverlust entspricht, der auf der Primärseite der Austauschwand bei Durchströmen des Trägergases durch die Austauscheinrichtung entsteht — sowie einen Temperaturausgleich zwischen Primär- und Sekundärseite der Austauschwand. Der den Isotopenaustausch bewirkende Stoff wird dem abgezweigten Teilgasstrom des Trägergases so rechtzeitig zugeführt, daß beim Einlauf des Gases zur Sekundärseite der Austauschwand ein ausreichendes Konzentrationsgefälle zum Trägergas auf der Primärseite der Austauschwand vorhanden ist. Vorteilhaft ist es, den sekundärseitigen Trägergasstrom nach Zugabe des mit den Wasserstoffisotopen reagierenden Stoffes noch vor Durchströmen der Sekundärseite der Austauschwand über einen die Reaktion zwischen zugegebenem Stoff und Wasserstoffisotopen beschleunigenden Katalysator zuleiten, beispielsweise über Platin imprägnierte Aktivkohle. Solche Katalysatoren und solche in der bereits genannten Literaturstelle Chem.-Ing.-Technik 52, 1980, Seite 892 angegebene Katalysatoren lassen sich auch auf der Sekundärseite der Austauschfläche zur Beschleunigung des Isotopenaustausches einsetzen. Um das erforderliche Konzentrationsgefälle noch vor Eintritt des abgezweigten Trägergases zur Sekundärseite der Austauschwand zu erzeugen, läßt sich der abgezweigte Teilstrom auch über ein Metalloxid-Bett führen, indem der vom Trägergas mitgeführte Wasserstoff oxidiert wird, bevor dem Teilgasstrom der den Isotopenaustausch bewirkende Stoff zugeführt wird.

Vorteilhaft ist es, die Einstellung des gewünschten Partialdruckes in jeder Anreicherungsstufe nach Reduktion des im primärseitigen Trägergasstrom enthaltenden Wassers vorzunehmen. Dies insbesondere dann, wenn das Wasser enthaltende Gas zur Reduktion durch ein Metallbett, beispielsweise durch ein Eisengranulat- oder Kupfergranulat-Bett geführt wird, bei denen beim Durchströmen entsprechende Druckverluste entstehen. Zur Beschleunigung der gewünschten Atomisierung der Reduktionsprodukte wird der primärseitige Trägergasstrom vor Kontakt mit der Austauschwand noch über einen Katalysator, insbesondere über Metallhydrid, beispielsweise $UH_3$, $UD_3$ geführt. Der Katalysator kann als Festbett-Katalysator oder als Imprägnierung auf der Primärseite der Austauschwand vorgesehen sein.

Wird Deuterium und/oder Tritium im sekundärseitigen Trägergas in Wasser angereichert, so ist es günstig, in den Trägergasstrom auf der Sekundärseite Wasser einzuführen, dessen Deuterium und/oder Tritium-Gehalt dem Gehalt an Deuterium und/oder Tritium entspricht, den das der ersten Anreicherungsstufe primärseitig in den Trägergasstrom eingeführte Wasser aufweist.

Zweckmäßig wird der von der Primärseite der Austauschwand abströmende Trägergasstrom — gegebenenfalls nach Entnahme eines zur Sekundärseite der Austauschwand geführten Teilstroms — nach Oxidation des vom Trägergas mitgeführten Wasserstoffs und Abscheidung des dabei gebildeten Wassers im Kreislauf zum Eingang der Anreicherungsstufe zurückgeführt. Um für die Abtrennung des Wasserstoffs aus dem primärseitigen Trägergasstrom nur geringe Druckverluste hinnehmen zu müssen, wird der Trägergasstrom bevorzugt an einer weiteren für die Permeation von Wasserstoff geeigneten Austauschwand entlanggeführt, auf deren Sekundärseite ein Oxidationsmittel zur Oxidation des durch die Austauschwand permeierenden Wasserstoffs vorhanden ist. Als Oxidationsmittel eignen sich vor allem Sauerstoff- oder Metalloxide, wie Kupferoxid oder Eisenoxid. Das als Reaktionsprodukt gebildete Wasser wird von der Sekundärseite der Austauschwand ebenfalls von Trägergas abgeführt und durch Kondensation abgeschieden. Ein Teil dieses Wassers läßt sich auf der Sekundärseite der Austauschwand als für den Isotopenaustausch geeigneter Stoff verwenden. In diesem Falle ist jedoch zur Gewinnung von Deuterium und/oder Tritium nur die Hälfte der Deuterium und/oder Tritium enthaltenden Wassermenge nutzbar, die bei Verwendung von Ausgangswasser auch als Stoff für den Isotopenaustausch auf der Sekundärseite der Austauschwand nutzbar ist. Als Ausgangswasser wird hier das Deuterium und/oder Tritium enthaltende Wasser bezeichnet, das in der ersten Anreicherungsstufe dem primärseitig der Austauschwand strömenden Trägergasstrom zugeführt wird.

In weiterer Ausbildung der Erfindung ist vorgesehen, zumindest einen Teil des von der Primärseite der Austauschwand abströmenden Trägergases nach Abtrennung des mitgeführten Wasserstoffs in der nächsten Stufe zur Einstellung des Wasserstoffpartialdruckes zu nutzen. Das Wasserstofffreie Trägergas wird zweckmäßig im Kreislauf geführt, wobei die Förderaggregate für den Trägergasstrom jeweils im wasserstofffreien Teil des Kreislaufs angeordnet sind.

Im folgenden wird das erfindungsgemäße Verfahren und eine Vorrichtung zur Durchführung des Verfahrens, die Teil der Erfindung ist, anhand von Ausführungsbeispielen näher erläutert. Die Zeichnung zeigt schematisch eine Anlage zur Anreicherung von Deuterium und/oder Tritium in Wasser bzw.

Wasserdampf mit zwei Anreicherungsstufen, denen jedoch je nach gewünschtem Anreicherungsgrad weitere Anreicherungsstufen gleichen Aufbaus nachschaltbar sind.

In der Zeichnung sind jeweils gleichartig aufgebaute Anlagenteile, die in jeder der Anreicherungsstufen eingesetzt sind, mit gleicher Bezugszahl versehen. Zur Kenntlichmachung der einzelnen Anreicherungsstufen sind diesen Bezugszahlen als Bezugszeichen für die Anlagenteile Buchstaben hinzugefügt worden, die die zugehörige Anreicherungsstufe kennzeinen. Für die erste Anreicherungsstufe wurde den Bezugszahlen der Zusatz « a », für die zweite Anreicherungsstufe der Zusatz « b » hinzugefügt.

Wie aus der Zeichnung ersichtlich ist, weist jede Anreicherungsstufe der Anlage in Strömungsrichtung 1a, 1b eines in einer Zuleitung 2a, 2b (2c für die dritte, in der Zeichnung nicht wiedergegebene Anreicherungsstufe) geführten Trägergasstromes hintereinander geschaltet eine Reduktionskammer 3a, 3b für im Trägergasstrom enthaltenes Wasser, das in der ersten Anreicherungsstufe über eine Zuleitung 4 mit Durchflußregler 5 in den Trägergasstrom eingeführt wird, eine Austauscheinrichtung 6a, 6b für Isotopenaustausch zwischen Deuterium und/oder Tritium und Wasserstoff sowie eine Oxidationskammer 7a, 7b für vom Trägergasstrom aus der Austauscheinrichtung 6a, 6b mitgeführten Wasserstoff auf. Jede Austauscheinrichtung 6a, 6b ist ähnlich wie ein Wärmetauscher aufgebaut. Es lassen sich beispielsweise sowohl nach Art von Rohrbündelwärmeaustauschern, wobei beispielsweise Wendelrohre eingesetzt sind, oder nach Art von Plattenwärmetauschern mit ebenen oder gewellten Wänden ausgebildete Apparate verwenden. Die sonst dem Wärmeaustausch dienenden Einbauten bilden in den Austauscheinrichtungen Austauschwände für die Permeation der Wasserstoffisotope. In der Zeichnung sind die Austauschwände lediglich schematisch dargestellt und mit Bezugsziffern 8a, 8b bezeichnet. Ihrem Zweck entsprechend bestehen die Austauschwände aus einem Material mit hoher Permeationsfähigkeit für Wasserstoff, im Ausführungsbeispiel sind die Austauschwände aus Palladium oder Palladium-Silber (etwa 75 % Pd, 25 % Ag) ausgebildet. Als Material für die Austauschwände eignen sich jedoch auch palladiumbeschichtete Nb, Ta, V sowie Legierungen dieser Metalle oder auch aneinander gefügte Metallschichten.

In jede der Austauscheinrichtungen 6a, 6b wird mit dem Trägergas nach Reduktion des in den Trägergasstrom eingeführten Wassers in der Reduktionskammer 3a, 3b ein Wasserstoff/Deuterium/Tritium-Gasgemisch eingeführt. Der für die Permeation der Wasserstoffisotope vorgesehene Wasserstoffpartialdruck im Trägergas wird nach Reduktion des Wassers durch Einleiten weiteren Trägergases über eine Trägergasleitung 9a, 9b mit Durchflußreglern 10a, 10b und 11 eingestellt. Um optimale Bedingungen für die Permeation der Wasserstoffisotope durch die Austauschwand auch über längere Betriebszeiten hinweg zu erhalten, wird der Partialdruck für Wasserstoff nicht höher als 100 mbar eingestellt. Als Betriebstemperatur ist in der Austauscheinrichtung eine Temperatur im Temperaturbereich zwischen 100 und 300 °C vorgesehen. Zur Aufheizung des Trägergases dient eine Heizung 12a, 12b, die von einem Thermostaten 13a, 13b in der Austauscheinrichtung 6a, 6b gesteuert wird. Die Aufheizung des Trägergases erfolgt unter Ausnutzung der bei der Reduktion des Wassers in der Reduktionskammer 3a, 3b infolge exothermen Prozeßes entstehenden Wärme.

Um den Transport der Molekeln zur Oberfläche der Molekeln zur Oberfläche der Austauschwand nicht zu hemmen und zur Begrenzung der umzuwälzenden Trägrgasmasse ist es zweckmäßig bei einem Gesamtdruck zwischen 1 und 5 bar zu arbeiten. Bei höherem Druck werden in der Austauschwinrichtung größere Austauschflächen sowie Maßnahmen zur Abdichtung der Anlage benötigt.

Das Trägergas wird in Strömungsräumen 14a, 14b, die jeweils auf der Primärseite der Austauschwand 8a, 8b angeordnet sind, an der Austauschwand entlanggeführt. Auf der Sekundärseite der Austauschwand 8a, 8b, strömt in den Austauscheinrichtungen ein weiterer Trägergasstrom in Gegenrichtung 15a, 15b zum Trägergas auf der Primärseite. Das sekundärseitige Trägergas wird über eine Gasleitung 16a, 16b in Strömungsräume 17a, 17b der Austauscheinrichtung eingeführt. Im Ausführungsbeispiel ist sowohl primär- als auch sekundärseitig als Trägergas Helium vorgesehen. Als Trägergas lassen sich jedoch auch andere Inertgase, insbesondere Argon verwenden.

Im Strömungsraum 17a, 17b der Austauscheinrichtung 6a, 6b ist in jeder Austauschstufe im Trägergas Wasser bzw. Wasserdampf enthalten, die über eine Wasser- oder Wasserdampfleitung 18a, 18b mit Durchflußregler 19a, 19b in den Trägergasstrom eingeführt werden. Wird Wasser in den Trägergasstrom eingeführt, so ist dieses noch vor Eintritt des Trägergases in den sekundärseitigen Strömungsraum 17a, 17b der Austauscheinrichtung zu verdampfen. Der Wasserdampf reagiert im Strömungsraum 17a, 17b weitgehend bereits auf der Oberfläche der Austauschwand mit dem von der Primärseite der Austauschwand 8a, 8b permeierenden Wasserstoffisotopen Deuterium und/oder Tritium durch Isotopenaustausch. Deuterium und/oder Tritium verlassen die Oberfläche der Austauschwand auf der Sekundärseite überwiegend als HDO und $D_2O$ beziehungsweise HTO und $T_2O$ Molekeln und nur zu einem vernachlässigbar geringen Teil als HD, $D_2$ oder HT, $T_2$ Molekeln. Die vom Trägergasstrom hierzu pro Zeiteinheit mitzuführende Wassermenge ist dem Massenwirkungsgesetzt entsprechend zumindest um das für die Permeation von Deuterium und/oder Tritium erforderliche Konzentrationsgefälle zwischen Primär- und Sekundärseite der Austauschwand 8a, 8b größer zu bemessen, als die primärseitig im Inertgasstrom strömente Wasserstoff ($H_2$)-Menge pro Zeiteinheit dividiert durch die Gleichgewichtskonstante der für den gewünschten Isotopenaustausch zwischen Deuterium und/oder Tritium maßgebenden Reaktionsgleichung. Die Wassermenge ist jedoch kleiner einzustellen als die pro Zeiteinheit im Trägergasstrom auf der Primärseite der Austauschwand mitgeführte Wasserstoffmenge, um eine Anreicherung zu erzielen. Innerhalb dieser Grenzen ist die Wassermenge varrierbar, wobei das die

Permeation fördernde Konzentrationsgefälle zwischen Primär- und Sekundärseite der Austauschwand um so höher ist, je mehr Wasser in den Trägergasstrom eingeführt wird. Es ist somit eine Optimierung erforderlich, da mit steigender Wassermenge der erzielbare Anreicherungsgrad sinkt. Die beim Isotopenaustausch erhaltenen Reaktionsprodukte werden vom Trägergas von der Sekundärseite der Austauschwand abgeführt.

Zur Ausbildung des Trägergasstroms auf der Sekundärseite der Austauschwand wird im Ausführungsbeispiel ein Teil des von der Primärseite der Austauschwand in einer Abgasleitung 20a, 20b abströmenden Trägergases abgezweigt. Zur Einstellung des Teilgasstroms dienen sowohl Durchflußregler 21a, 21b in der Abgasleitung 20a, 20b als auch Durchflußregler 22a, 22b, die in die Gasleitung 16a, 16b eingesetzt sind, bevor diese in die Abgasleitung 20a, 20b mündet. Die Einstellung der abgezweigten Teilgasmenge beeinflußt die Konzentration des Wasserdampfes im sekundärseitigen Trägergasstrom. Vom Bypaßfaktor, der das Verhältnis von Massendurchsatz des Trägergases auf der Sekundärseite der Austauschwand zum Massendurchsatz des Trägergases auf der Primärseite angibt, ist die sich einstellende Wasserdampfkonzentration umgekehrt proportional abhängig. Die Wasserdampfkonzentration, $[H_2O]$, im sekundärseitigen Trägergasstrom ergibt sich bei Anreicherung von Deuterium unter Berücksichtigung von oben angegebener Reaktionsgleichung (2) und einer Ausbeute von nahezu 100 % aus

$$[H_2O] = \xi D \cdot \frac{[H_2]}{\alpha . \kappa(2)},$$

wobei

$\xi_D$ = Konzentrationsgefälle für HD (HD-Partialdruck primärseitig zu HD-Partialdruck sekundärseitig)
$[H_2]$ = Wasserstoffkonzentration im primärseitigen Trägergasstrom
$\alpha$ = Bypaßfaktor (Trägergas-Massendurchsatz sekundärseitig zu Trägrgas-Massendurchsatz primärseitig)
$\kappa_{(2)}$ = Gleichgewichtskonstante für Reaktionsgleich ung (2).

Der Trägergasstrom, der in der Abgasleitung 20a, 20b nach Entnahme des Teilgasstroms verbleibt, wird in die Oxidationskammer 7a, 7b eingeführt, in der der vom Trägergasstrom nach Abtrennung von Deuterium und/oder Tritium aus den Wasserstoff/Deuterium/Tritium-Gemisch noch mitgeführte Wasserstoff, $H_2$, oxidiert wird. Im Ausführungsbeispiel ist die Oxidationskammer 7a, 7b analog zur Austauscheinrichtung 6a, 6b ausgebildet und weist in gleicher Weise Austauschwände auf, die für die Permeation von Wasserstoff geeignet sind. An diesen Austauschwänden, die in der Zeichnung lediglich schematisch dargestellt und mit Bezugszeichen 23a, 23b markiert sind, wird der Trägergasstrom in Strömungsräumen 24a, 24b der Oxidationskammer primärseitig entlanggeführt. Aus dem Trägergas permeiert der Wasserstoff durch die Austauschwände 23a, 23b und wird auf der Sekundärseite jeder Austauschwand durch Oxidation gebunden. Als Oxidationsmittel befindet sich im Ausführungsbeispiel in den Strömungsräumen 25a, 25b ein Metalloxid-Bett 26a, 26b, beispielsweise ein Granulatbett aus Kupferoxid oder Eisenoxid, das bei Reaktion mit dem permeierten Wasserstoff unter Bildung von Wasser reduziert wird. Das Metalloxid-Bett 26a, 26b ist in der Zeichnung durch Punktieren der Strömungsräume 25a, 25b kenntlich gemacht. Zur Oxidation des permeierten Wasserstoffs ist jeden Strömungsraum 25a, 25b auch Sauerstoff über eine Sauerstoffleitung 27a, 27b mit Durchflußregler 28a, 28b zuführbar. Im allgemeinen wird der Wasserstoff in der Oxidationskammer 7a, 7b jedoch entweder an Metalloxid oder durch Einleitung von Sauerstoff in den Strömungsraum 25a, 25b oxidiert. Die Oxidationskammer 7a, 7b mit Austauschwänden 23a, 23b bietet vorallem hinsichtlich der beim Durchströmen des Trägergases zu berücksichtigenden Strömungswiderstände Vorteile. Sind diese von geringerer Bedeutung, läßt sich die Oxidation des vom Trägergas mitgeführten Wasserstoffs beispielsweise auch unmittelbar durch Einleiten des primärseitigen Trägergases in ein Metalloxid-Bett erreichen. Das sich dabei bildende Wasser wird abgeführt.

Im Ausführungsbeispiel sind an der Oxidationskammer 7a, 7b, zum Ein- und Abführen eines die Oxidationsprodukte von der Sekundärseite der Austauschwand 23a, 23b abführenden Trägergases einerseits eine Zufuhrleitung 29a, 29b für Trägergas und eine Ableitung 30a, 30b für das mit Reaktionsprodukten beladene Trägergas angeschlossen. Der Trägergasstrom auf der Sekundärseite der Austauschwand wird im Gegenstrom zum auf der Primärseite der Austauschwand strömenden Trägergas geführt. Die Ableitung 30a, 30b mündet in einen Kondensator 31a, 31b, in dem das mitgeführte Wasser kondensiert und über eine Kondensatleitung 32a, 32b abgezogen wird. Im Ausführungsbeispiel ist die Kondensatleitung 32a, 32b mit der Wasser bzw. Wasserdampfleitung 18a, 18b verbindbar. Über einen Durchflußregler 33a, 33b läßt sich die Wassermenge regulieren, die vom Kondensator 31a, 31b in die Wasser- bzw. Wasserdampfleitung 18a, 18b einleitbar ist.

Ist die gewünschte Anreicherung von Deuterium und/oder Tritium durch Isotopenaustausch in mehreren hintereinander geschalteten Anreichungsstufen (n-mal) erreicht, so wird das der letzten Anreicherungsstufe sekundärseitig der Austauschwand entnommene Trägergas über eine Ausgangsleitung 34 in einen Kondensator 35 eingeführt. Im Kondensator 35 wird das mit Deuterium und/oder Tritium angereicherte Wasser kondensiert und über die Kondensatleitung 36 abgeführt. Zur Erzeugung eines

angereicherten Wasserstoff/Deuterium/Tritium-Gasgemisches ist an der Ausgangsleitung 34 auch eine zu einer Reduktionskammer 37 geführte Verbindungsleitung 38 angeschlossen. Das Trägergas läßt sich somit nach Schließen eines Ventils 39 am Eingang des Kondensator 35 und nach Öffnen eines Ventils 40 in der Verbindungsleitung 38 in die Reduktionskammer 37 einleiten, in der, beispielsweise in einem das Wasser reduzierenden Metallgranulat-Bett, ein mit Deuterium und/oder Tritium hoch angereichertes Wasserstoff/Deuterium/Tritium-Gasgemisch gebildet wird, das über eine Gasleitung 41 abführbar ist.

Das erzeugte hochangereicherte Wasser bzw. das erzeugte Wasserstoff/Deuterium/Tritium-Gasgemisch läßt zur weiteren Anreicherung und zur Gewinnung von Deuterium und/oder Tritium beispielsweise Anlagen zur Wasserelektrolyse oder zum katalytischen Isotopenaustausch, beispielsweise zum Isotopenaustausch an Platin zuleiten. Diese bekannten Verfahren sind jetzt wirtschaftlicher einsetzbar, da von einem Produkt mit hoher Deuterium- und/oder Tritium-Konzentration ausgegangen werden kann.

Wird bei Betrieb der beschriebenen Anlage in einen primärseitig zur ersten Anreicherungsstufe geführten Trägergasstrom von insgesamt 2,5 kg Helium pro Sekunde (diese Angabe bezieht sich auf das der Austauscheinrichtung 6a insgesamt zugeführte Helium) über die Zuleitung 4 eine Wassermenge von 0,56 kg/sec ≙ 2,02 t/h eingeführt, so stellt sich im Trägergas auf der Primärseite der Austauschwand 8a bei nahezu vollständigem Umsatz bei der Reduktion des Wasser ein Wasserstoff($H_2$)-Partialdruck von 46,2 mbar ein. Die Austauschwand der ersten Anreicherungsstufe ist so ausgelegt, daß ca. 97 % des im primärseitigen Trägergassstrom enthaltenen Deuteriums und/oder Tritiums zur Sekundärseite permeieren. In der Austauscheinrichtung ist beiderseits der Austauschwand ein Gesamtdruck von ca. 1 bar und eine Temperatur von 120 °C eingestellt. Diese Betriebsverhältnisse gelten für alle Anreicherungsstufen der Anreicherungsanlage. Zur Aufnahme der permeierten Wasserstoffisotope strömt auf der Sekundärseite der Austauschwand ein Trägergasstrom 0,25 kgHelium/sec (Bypaßfaktor der ersten Anreicherungsstufe $\alpha_a = 0{,}1$). Der Trägergasstrom enthält eine Wassermenge von 0,277 kg/sec ≙ 1 t/h. Wird dieses Wasser insgesamt dem in der Oxidationskammer 7a gewonnenen Kondensatwassers entnommen, stellt sich in der ersten Anreicherungsstufe in der Austauscheinrichtung 6a im sekundärseitig abströmenden Trägergas bei 97 % Ausbeute für $D_2O$ und HDO ein Partialdruck von 66,4 μbar ein. Damit ergibt sich ein Anreicherungsgrad S für Deuterium in der ersten Anreicherungsstufe von S = 2. Wird dem Trägergas auf der Sekundärseite der Austauschwand für den Isotopenaustausch Wasser mit einem Deuterium und/oder Tritiumgehalt zugegeben, der dem Deuterium und/oder Tritiumgehalt entspricht, dem das dem primärseitigen Trägergasstrom der ersten Anreicherungsstufe zugeführte Wasser aufweist (dieser Deuterium und/oder Tritiumgehalt wird im folgenden als Ausgangsqualität bezeichnet), so stellt sich im Trägergas auf der Sekundärseite der Austauschwand bei gleicher Ausbeute für $D_2O$ und HDO ein Partialdruck von 99,6 μbar ein. Dies entspricht einem Anreicherungsgrad von S = 3. Für den Tritiumanteil im Trägergas wird unter gleichen Voraussetzungen im Falle einer Verwendung von Kondensatwasser aus der Oxidationskammer ein Anreicherungsgrad von S = 3, bei Verwendung von Wasser mit Ausgangsqualität ein Anreicherungsgrad von S = 4 erreicht. Als Anreicherungsgrad wird dabei das Verhältnis von Deuterium- oder Tritium-Partialdruck, [D] oder [T], bezogen auf den Gesamtpartialdruck der Wasserstoffisotope am sekundärseitigen Ausgang der Austauscheinrichtung der i-ten-Austauschstufe, Bezeichnung Ai, zum Deuterium- oder Tritium-Partialdruck, [D] oder [T], bezogen auf den Gesamtpartialdruck der Wasserstoffisotope am primärseitigen Eingang der Austauscheinrichtung der ersten Anreicherungsstufe, Bezeichnung Ao, verstanden. Als Anreicherungsgrad ergibt sich somit für

Deuterium

$$S_D = \left(\frac{[D]}{[H] + [D]}\right)_{Ai} : \left(\frac{[D]}{[H] + [D]}\right)_{A0}$$

und für Tritium

$$S_T = \left(\frac{[T]}{[H] + [T]}\right)_{Ai} : \left(\frac{[T]}{[H] + [T]}\right)_{A0}$$

Bei der Berechnung der sich durch Isotopenaustausch einstellenden Partialdrücke für Deuterium und Tritium in der ersten Anreicherungsstufe wurde von einer Ausbeute von 97 % ausgegangen. Unter Ausbeute wird die durch Isotopenaustausch im Wasser im sekundärseitigen Trägergasstrom gebundene Deuterium- oder Tritiummenge bezogen auf die Deuterium- oder Tritiummenge des der ersten Anreicherungsstufe primärseitig zugeführten Wassers verstanden. Die restlichen 3 % des gewinnbaren Deuteriums oder Tritiums verbleiben im primärseitig abgeführten Trägergas und werden in der Oxidationskammer bei Oxidation des Wasserstoffs mit abgeführt.

Aus der ersten Anreicherungsstufe strömt der zweiten Anreicherungsstufe ein Trägergas mit einer Wassermenge von 0,277 kg/sec ≙ 1 t/h zu. Das Wasser wird in der Reduktionskammer 3b in ein Wasserstoff/Deuterium/Tritium-Gasgemisch überführt. Anschließend wird durch Zuführen weiteren Trägergases über die hinter der Reduktionskammer 3d mündende Trägergasleitung 9b der Trägergasstrom auf 2,5 kg Helium/sec. eingestellt. Damit ergibt sich für den Wasserstoff($H_2$)-Partialdruck ein Wert von 23,1 mbar sowie — entsprechend dem in der ersten Anreicherungsstufe erreichten Anreicherungs-

grad — ein Deuterium($D_2$, HD)-Partialdruck von 6,64 µbar für den Fall einer Anreicherung mit Kondensatwasser aus der Oxidationskammer, beziehungsweise ein Deuterium($D_2$, HD)-Partialdruck von 9,96 µbar für die Anreicherung bei Verwendung von Wasser von Ausgangsqualtität im sekundärseitigen Trägergas. In gleicher Weise entspricht der Tritiumanteil dem in der ersten Stufe erreichten Anreicherungsgrad, wobei sich bei Verwendung von Kondensationswasser ein niedrigerer, bei Verwendung von Wasser mit Ausgangsqualität ein höherer Partialdruck einstellt.

Die Austauscheinrichtung 6b der zweiten Anreicherungsstufe weist eine in gleicher Weise wie die Austauschwand 8a der ersten Anreicherungsstufe bemessene Austauschwand 8b auf. Die erzielbare Ausbeute beträgt in der zweiten Anreicherungsstufe 99 %. Für die Ausbildung des auf der Sekundärseite der Austauschwand 8b strömenden Trägergasstromes ist in der zweiten Anreicherungsstufe ein Bypaßfaktor von $\alpha_6 = 0{,}05$ eingestellt. In den sekundärseitigen Trägergasstrom wird eine Wassermenge von 0,15 kg/sec ≙ 0,54 t/h eingeführt. Wird hierfür Kondensatwasser aus der Oxidationskammer 7b verwendet, stellt sich am Ende der zweiten Anreicherungsstufe für Deuterium ein Anreicherungsgrad von $S_D = 3{,}7$ ein, wird in den sekundärseitigen Trägergasstrom Wasser von Ausgangsqualität eingeführt, so wird für Deuterium ein Anreicherungsgrad von $S_D = 6{,}59$ erreicht. Für den Tritiumanteil ergibt sich in der zweiten Anreicherungsstufe ein Anreicherungsgrad von $S_T = 8{,}35$ bei Verwendung von Kondensatwasser aus der Oxidationskammer, von $S_T = 12{,}2$ bei Verwendung von Wasser von Ausgangsqualität.

Der Austauscheinrichtung der dritten Stufe strömt das Trägergas nun nur noch mit einer Wassermenge von 0,54 t/h zu. Die für die Permeation der Wasserstoffisotope benötigte Austauschfläche kann somit bei auf 99,5 % steigender Ausbeute um etwa 30 % verringert werden. Bei gleichbleibendem Trägergasstrom von 2,5 kg Helium/sec und einem Bypaßfaktor von $\alpha_c = 0{,}05$ wird in den zur Sekundärseite der Austauschwand der dritten Anreicherungsstuge geführten Trägergasstrom noch 0,076 kg/sec ≙ 0,272 t/h Wasser eingeführt. Am Ausgang der dritten Stufe ergibt sich für Deuterium ein Anreicherungsgrad von $S_D = 7{,}35$ bei Verwendung von Kondensatwasser aus der Oxidationskammer, von $S_D = 14$ bei Verwendung von Wasser mit Ausgangsqualität. Für Tritium ergeben sich Anreicherungsgrade unter gleichen Voraussetzungen im ersten Falle von $S_T = 25$, im zweiten Falle von $S_T = 48$.

In der siebten Anreicherungsstufe sind die im Trägergasstrom mitzuführenden Wassermengen nur noch gering. Die erforderlichen Austauschwände lassen sich so anpassen, daß bei der Permeation der Wasserstoffisotope durch die Austauschwand Ausbeuten von annähernd 1 erreichbar sind. In der siebten Austauschstufe sind dem sekundärseitigen Trägergasstrom nur noch 17,1 kg Wasser/h zuzuführen. Am Ausgang dieser Stufe ist für Deuterium ein Anreicherungsgrad von $S_D = 118$ bei Verwendung von Kondensationswasser aus der Oxidationskammer und ein Anreicherungsfaktor von $S_D = 237$ bei Verwendung von Wasser mit Ausgangsqualität erreicht. In letzterem Falle befindet sich nun der Deuteriumgehalt von insgesamt 4t Wasser von Ausgangsqualität in 17,1 kg Wasser. Nach der 12. Anreicherungsstufe ist für Deuterium ein Anreicherungsgrad von $S_D = 2.771$ bzw. 3/620 erreicht. Nach der 12. Anreicherungsstufe sind nur noch 0,453 kg Wasser/h weiter zu verarbeiten.

Das erfindungsgemäße Anreicherungsverfahren von Deuterium und/oder Tritium in Wasser läßt sich in vorteilhafter Weise auch für die Entsorgung von Tritium enthaltenden Wassers anwenden, das bei der Kühlgasreinigung von Hochtemperatur-Kernreaktoranlagen und bei der Wiederaufarbeitung von Brennelementen anfällt. Das einer Kühlgasreinigungsanlage entnommene Wasser wird dann sowohl unmittelbar in den zur ersten Anreicherungsstufe geführten primärseitigen Trägergasstrom, als auch in den sekundärseitigen Trägergasstrom als Stoff für den Isotopenaustausch eingeführt. Wie oben gezeigt läßt sich dann bei einer Anlage mit mehreren Anreicherungsstufen eine Konzentration des über die Gasreinigungsanlage dem Kühlgas entzogenen Tritiums in Wasser erreichen, wobei die schließlich mit den radioaktiven Verunreinigungen zu lagernde Wassermenge um den Anreicherungsgrad zu verringern ist. Die beschriebene Anreicherungsanlage läßt sich bevorzugt in Verbindung mit einer Vorrichtung zum Abtrennen von Wasserstoff und/oder Deuterium und Tritium aus einem Kühlgasstrom von Hochtemperaturreaktoranlagen einsetzen. Diese Vorrichtung weist unmittelbar im Primärkühlgaskreislauf angeordnete Gasreinigungskammern auf, die wie die Austauscheinrichtungen der hier beschriebenen Anreicherungsanlage mit für die Permeation von Wasserstoff geeigneten Austauschwänden ausgerüstet sind. Von den Gasreinigungskammern wird ein Trägergasstrom abgezogen, der dem Kühlgaskreislauf der Kernreaktoranlage entzogenes Deuterium und/oder Tritium in oxidierter Form enthält. Dieser Trägergasstrom kann unmittelbar der Reduktionskammer der ersten Stufe der erfindungsgemäßen Anreicherungsanlage zugeführt werden.

**Ansprüche**

1. Verfahren zur stufenweisen Anreicherung von Deuterium und/oder Tritium in einem für den Isotopenaustausch von Deuterium und Tritium mit Wasserstoff geeigneten Stoff, dadurch gekennzeichnet, daß Deuterium und/oder Tritium enthaltendes Wasser in einen Trägergasstrom eingeführt und reduziert wird, wobei im Trägergasstrom ein Wasserstoff($H_2$)-Partialdruck von maximal 100 mbar eingestellt wird, daß der Trägergasstrom im Anschluß daran primärseitig an einer für die Permeation von Wasserstoff geeigneten Austauschwand entlanggeführt wird, auf deren Sekundärseite ein weiterer Trägergasstrom strömt, der den für den Isotopenaustausch geeigneten Stoff, in dessen Gasphase

überführt, enthält, und daß nach Isotopenaustausch von Deuterium und/oder Tritium mit Wasserstoff gebildete Reaktionsprodukte vom sekundärseitigen Trägergas abgeführt werden.

2. Verfahren nach Anspruch 1, dadurch gekennzeichnet, daß als Stoff für den Isotopenaustausch in den sekundärseitigen Trägergasstrom Wasser beziehungsweise Wasserdampf eingegeben wird.

3. Verfahren nach Anspruch 2, dadurch gekennzeichnet, daß für den Isotopenaustausch eine Temperatur im Temperaturbereich zwischen 100° und 300 °C eingestellt ist.

4. Verfahren nach einem der Ansprüche 1, 2 oder 3, dadurch gekennzeichnet, daß der Trägergasstrom auf der Sekundärseite im Gegenstrom zum Trägergasstrom auf der Primärseite der Austauschwand geführt wird.

5. Verfahren nach einem der vorgehenden Ansprüche, dadurch gekennzeichnet, daß auf der Primärseite und der Sekundärseite der Austauschwand das gleiche Trägergas verwendet wird.

6. Verfahren nach Anspruch 5, dadurch gekennzeichnet, daß ein Teil des von der Primärseite der Austauschwand abströmenden Trägergasstroms abgezweigt und nach Zugabe des für den Isotopenaustausch geeigneten Stoffes zur Sekundärseite der Austauschwand geführt wird.

7. Verfahren nach einem der vorhergehenden Ansprüche, dadurch gekennzeichnet, daß der sekundärseitige Trägergasstrom nach Zugabe des Stoffes für den Isotopenaustausch noch vor Durchströmen der Sekundärseite der Austauschwand über einen Katalysator geleitet wird, der die Reaktion zwischen zugegebenem Stoff und im sekundärseitigen Trägergasstrom enthaltenen Wasserstoffisotopen beschleunigt.

8. Verfahren nach Anspruch 7, dadurch gekennzeichnet, daß der Katalysator zusätzlich auf der Sekundärseite der Austauschwand eingesetzt ist.

9. Verfahren nach einem der vorhergehenden Ansprüche, dadurch gekennzeichnet, daß der sekundärseitige Trägergasstrom vor Zugabe des Stoffes für den Isotopernaustausch über Metalloxid geführt wird.

10. Verfahren nach einem der vorhergehenden Ansprüche, dadurch gekennzeichnet, daß der Wasserstoff($H_2$)-Partialdruck im primärseitigen Trägergasstrom nach Reduktion des im Trägergas enthaltenen Wassers eingestellt wird.

11. Verfahren nach einem der vorhergehenden Ansprüche, dadurch gekennzeichnet, daß der primärseitige Trägergasstrom vor und/oder im Bereich der Austauschwand über einen die Atomisierung der Reduktionsprodukte beschleunigenden Katalysator geführt wird.

12. Verfahren nach einem der vorhergehender Ansprüche, dadurch gekennzeichnet, daß in den sekundärseitigen Trägergasstrom als für den Isotopenaustausch geeigneter Stoff Wasser eingeführt wird, dessen Gehalt an Deuterium und/oder Tritium dem Gehalt an Deuterium und/oder Tritium entspricht, den das der ersten Anreicherungsstufe primärseitig in den Trägergasstrom eingeführte Wasser aufweist.

13. Verfahren nach einem der vorgehenden Ansprüche, dadurch gekennzeichnet, daß der von der Primärseite der Austauschwand abströmende Trägergasstrom nach Oxidation des vom Trägergas mit geführten Wasserstoffs und nach Abscheidung des dabei gebildeten Wassers im Kreislauf zum Eingang der Anreicherungsstufe zurückgeführt wird.

14. Verfahren nach Anspruch 13, dadurch gekennzeichnet, daß das Trägergas primärseitig an einer für die Permeation von Wasserstoff geeigneten Austauschwand entlanggeführt wird, auf deren Sekundärseite ein für die Oxidation des permeierenden Wasserstoffs geeigenter Stoff vorhanden ist, und daß die auf der Sekundärseite gebildeten Reaktionsprodukte von einem weiteren Trägergasstrom abgeführt werden.

15. Verfahren nach Anspruch 13 oder 14, dadurch gekennzeichnet, daß das Wasserstoff-freie Trägergas zur Einstellung des Wasserstoff($H_2$)-Partialdruckes in den primärseitigen Trägergasstrom nach Reduktion des im Trägergas enthaltenes Wassers eingeführt wird.

16. Vorrichtung zur Durchführung des Verfahrens nach Anspruch 1, mit mehreren hintereinander geschalteten Anreicherungsstufen für die Anreicherung von Deuterium und/oder Tritium in einem für den Isotopenaustausch von Deuterium und Tritium mit Wasserstoff geeigneten Stoff, dadurch gekennzeichnet, daß in jeder Austauschstufe eine Zuleitung (2a, 2b) für Trägergas, dem Deuterium und/oder Tritium enthaltendes Wasser zugeführt ist, in eine Reduktionskammer (3, 3b) mündet, der eine Austauscheinrichtung (6a, 6b) für den Isotopenaustausch zwischen Deuterium und/oder Tritium und Wasserstoff nachgeschaltet ist, die wenigstens zwei von zumindest einer für die Permeation von Wasserstoff geeigneten Austauschwand (8a, 8b) getrennte Strömungsräume (14a, 14b, 17a, 17b) aufweist, von denen der primärseitig der Austauschwand angeordnete Strömungsraum (14a, 14b) an der Reduktionskammer (3a, 3b) angeschlossen ist und an seinem Ausgang eine Abgasleitung (20a, 20b) zum Abzug des Trägergases aufweist und in den sekundärseitig der Austauschwand (8a, 8b) angeordneten Strömungsraum (17a, 17b) eine Trägergasleitung (16a, 16b) für einen den Stoff für den Isotopenaustausch in seiner Gasphase enthaltenden Trägergasstrom mündet, und daß am Ausgang des sekundärseitigen Strömungsraumes (17a, 17b) eine Gasleitung (1b, 34) für den die Reaktionsprodukte abführenden Trägergasstrom angeschlossen ist.

17. Vorrichtung nach Anspruch 16, dadurch gekennzeichnet, daß in die sekundärseitige Trägergasleitung (16a, 16b) eine Wasser- beziehungsweise Wasserdampfleitung (18a, 18b) mündet.

18. Vorrichtung nach Anspruch 16 oder 17, dadurch gekennzeichnet, daß die Trägergasleitung (16a, 16b) über einen Durchflußregler (22a, 22b) an der Abgasleitung (20a, 20b) angeschlossen ist.

19. Vorrichtung nach einem der Ansprüche 16 bis 18, dadurch gekennzeichnet, daß die Abgasleitung (20a, 20b) in einer Oxidationskammer (7a, 7b) mündet und die Zuleitung (2a, 2b) am Ausgang der Oxidationskammer (7a, 7b) angeschlossen ist.

20. Vorrichtung nach einem der Ansprüche 16 bis 19, dadurch gekennzeichnet, daß eine Trägergasleitung (9a, 9b) mit Durchflußregler (10a, 10b) in die Zuleitung (2a, 2b) zwischen Reduktionskammer )3a, 3b) und Austauscheinrichtung (6a, 6b) mündet.

21. Vorrichtung nach einem der Ansprüche 16 bis 20, dadurch gekennzeichnet, daß die Oxidationskammer (7a, 7b) eine für die Permeation von Wasserstoff geeignete Austauschwand (23a, 23b) aufweist, auf deren Sekundärseite im Strömungsraum (25a) für einen Trägergasstrom ein für die Oxidation des permeierenden Wasserstoffs geeigenter Stoff vorhanden ist, und daß am Strömungsraum (25a, 25b) eine Zufuhrleitung (29a, 29b) für Trägergas und eine Ableitung (30a, 30b) für die Reaktionsprodukte abführendes Trägergas angeschlossen ist.

22. Vorrichtung nach Anspruch 21, dadurch gekennzeichnet, daß im Strömungsraum (25a, 25b) ein Metalloxid-Bett (26a, 26b) vorgesehen ist.

**Claims**

1. Process for the stage-wise concentration of deuterium and/or tritium in a substance suitable for the isotopic exchange of deuterium and tritium with hydrogen, characterised in that water containing deuterium and/or tritium is introduced into a stream of carrier gas and reduced, there being established in the stream of carrier gas a hydrogen ($H_2$) partial pressure of at most 100 mbars, in that the stream of carrier gas is then passed along the primary side of an exchange wall suitable for the permeation of hydrogen, along the secondary side of which wall flows a further stream of carrier gas which contains the substance suitable for the isotopic exchange, converted into its gas phase, and in that reaction products formed after the isotopic exchange of deuterium and/or tritium with hydrogen are carried away by the secondary-side carrier gas.

2. Process according to claim 1, characterised in that water or water vapour is introduced, as substance for the isotopic exchange, into the secondary-side stream of carrier gas.

3. Process according to claim 2, characterised in that the isotopic exchange is performed at a temperature in the range between 100° and 300 °C.

4. Process according to any one of claims 1, 2 and 3, characterised in that the stream of carrier gas on the secondary side of the exchange wall is guided in counter-current to the stream of carrier gas on the primary side.

5. Process according to any one of the preceding claims, characterised in that the same carrier gas is employed on the primary and secondary sides of the exchange wall.

6. Process according to claim 5, characterised in that a part of the stream of carrier gas flowing away from the primary side of the exchange wall is branched off and is passed to the secondary side of the exchange wall after addition of the substance suitable for the isotopic exchange.

7. Process according to any one of the preceding claims, characterised in that after addition of the substance for the isotopic exchange, and before flowing along the secondary side of the exchange wall, the secondary-side stream of carrier gas is passed over a catalyst which accelerates the reaction between the added substance and hydrogen isotopes contained in the secondary-side stream of carrier gas.

8. Process according to claim 7, characterised in that the catalyst is additionally provided on the secondary side of the exchange wall.

9. Process according to any one of the preceding claims, characterised in that the secondary-side stream of carrier gas is passed over metallic oxide before the addition of the substance for the isotopic exchange.

10. Process according to any one of the preceding claims, characterised in that the hydrogen ($H_2$) partial pressure in the primary-side stream of carrier gas is adjusted after reduction of the water contained in the carrier gas.

11. Process according to any one of the preceding claims, characterised in that before reaching and/or in the region of the exchange wall, the primary-side stream of carrier gas is passed over a catalyst which accelerates the atomisation of the reduction products.

12. Process according to any one of the preceding claims, characterised in that water is introduced into the secondary-side stream of carrier gas, as substance suitable for the isotopic exchange, has a deuterium and/or tritium content which corresponds to the deuterium and/or tritium content possessed by the water introduced into the stream of carrier gas on the primary side in the first enrichment stage.

13. Process according to any one of the preceding claims, characterised in that the stream of gas flowing away from the primary side of the exchange wall is circulated back to the inlet of the enrichment stage after oxidation of the hydrogen entrained by the carrier gas and after separation of the water thereby formed.

14. Process according to claim 13, characterised in that the carrier gas is guided along the primary side of an exchange wall suitable for the permeation of hydrogen, on the secondary side of which wall there is present a substance suitable for the oxidation of the permeating hydrogen, and in that the

reaction products formed on the secondary side are carried away by a further stream of carrier gas.

15. Process according to claim 13 or claim 14, characterised in that the hydrogen-free carrier gas for adjusting the hydrogen ($H_2$) partial pressure is introduced into the primary-side stream of carrier gas after reduction of the water contained therein.

16. Apparatus for carrying out the process according to claim 1, comprising a number of series-connected enrichment stages for the concentration of deuterium and/or tritium in a substance suitable for the isotopic exchange of deuterium and tritium with hydrogen, characterised in that, in each exchange stage, a supply pipe (2a, 2b) for carrier gas, to which water containing deuterium and/or tritium has been supplied, leads into a reduction chamber (3a, 3b) which is succeeded by an exchange device (6a, 6b) for the isotopic exchange between deuterium and/or tritium and hydrogen, which comprises at least two flow chambers (14a, 14b, 17a, 17b) which are separated by at least one exchange wall (8a, 8b) suitable for the permeation of hydrogen, and of which the flow chamber (14a, 14b) situated on the primary side of the exchange wall is connected to the reduction chamber (3a, 3b) and has at its outlet a gas discharge duct (20a, 20b) for the extraction of the carrier gas, and there opens into the flow chamber (17a, 17b) situated on the secondary side of the exchange wall (8a, 8b) a carrier gas duct (16a, 16b) for a stream of carrier gas containing the substance for the isotopic exchange in its gas phase, and in that there is connected to the outlet of the secondary-side flow chamber (17a, 17b) a gas duct (1b, 34) for the stream of carrier gas which carries away the reaction products.

17. Apparatus according to claim 16, characterised in that a water or water-vapour duct (18a, 18b) leads into the secondary-side carrier gas duct (16a, 16b).

18. Apparatus according to claim 16 or claim 17, characterised in that the carrier gas duct (16a, 16b) is connected to the gas discharge duct (20a, 20b) with the interposition of a flow regulator (22a, 22b).

19. Apparatus according to any one of claims 16 to 18, characterised in that the gas discharge duct (20a, 20b) opens into an oxidation chamber (7a, 7b) and the supply duct (2a, 2b) is connected to the outlet of the oxidation chamber (7a, 7b).

20. Apparatus according to any one of claims 16 to 19 characterised in that a carrier gas duct (9a, 9b) with a flow regulator (10a, 10b) leads into the supply duct (2a, 2b) between the reduction chamber (3a, 3b) and the exchange device (6a, 6b).

21. Apparatus according to any one of claims 16 to 20, characterised in that the oxidation chamber (7a, 7b) comprises an exchange wall (23a, 23b) which is suitable for the permeation of hydrogen and on the secondary side of which wall in the flow compartment (25a) for a stream of carrier gas there is a substance suitable for the oxidation of the permeating hydrogen, and in that there are connected to the flow compartment (25a, 25b) a supply duct (29a, 29b) for carrier gas and a discharge duct (30a, 30b) for carrier gas which carries away the reaction products.

22. Apparatus according to claim 21, characterised in that a bed of metallic oxide (26a, 26b) is provided in the flow compartment (25a, 25b).

**Revendications**

1. Procédé pour enrichir par paliers en deutérium et/ou en tritium une substance qui convient à l'échange isotopique entre du deutérium ou du tritium et de l'hydrogène, caractérisé en ce qu'il consiste à introduire de l'eau contenant du deutérium et/ou du tritium dans un courant de gaz porteur et à la réduire, la pression partielle d'hydrogène ($H_2$) du courant de gaz porteurs étant réglée à un maximum de 100 mbars, à faire passer ensuite le courant de gaz porteurs du côté primaire, le long d'une paroi d'échange qui convient pour la perméation de l'hydrogène, et sur le côté secondaire de laquelle s'écoule un autre courant de gaz porteur qui contient en phase gazeuse une substance qui convient pour l'échange isotopique, et, après l'échange isotopique du deutérium et/ou du tritium et de l'hydrogène, à évacuer par le gaz porteur, du côté secondaire, les produits de réaction formés.

2. Procédé suivant la revendication 1, caractérisé en ce qu'il consiste à charger comme substance pour l'échange isotopique, dans le courant de gaz porteur du côté secondaire, de l'eau, ou de la vapeur d'eau.

3. Procédé suivant la revendication 2, caractérisé en ce qu'il consiste à régler, pour l'échange isotopique, la température dans la gamme comprise entre 100° et 300 °C.

4. Procédé suivant l'une des revendications 1, 2 ou 3, caractérisé en ce qu'il consiste à envoyer le courant de gaz porteur du côté secondaire, à contre-courant du courant de gaz porteur du côté primaire de la paroi d'échange.

5. Procédé suivant l'une des revendications précédentes, caractérisé en ce qu'il consiste à utiliser, du côté primaire et du côté secondaire de la paroi d'échange, le même gaz porteur.

6. Procédé suivant la revendication 5, caractérisé en ce qu'il consiste à dériver une partie du courant de gaz porteur sortant du côté primaire de la paroi d'échange et, après addition de la substance qui convient pour l'échange isotopique, à l'envoyer au côté secondaire de la paroi d'échange.

7. Procédé suivant l'une des revendications précédentes, caractérisé en ce qu'il consiste à envoyer le courant de gaz porteur, du côté secondaire, après addition de la substance pour l'échange isotopique, mais avant qu'il ait parcouru le côté secondaire de la paroi d'échange, sur un catalyseur qui accélère la

réaction entre la substance ajoutée et des isotopes de l'hydrogène contenus dans le courant de gaz porteur du côté secondaire.

8. Procédé suivant la revendication 7, caractérisé en ce qu'il consiste à introduire en plus de catalyseurs du côté secondaire de la paroi d'échange.

9. Procédé suivant l'une des revendications précédentes, caractérisé en ce qu'il consiste à envoyer le courant de gaz porteur, du côté secondaire, avant l'addition de la substance pour l'échange isotopique sur un oxyde métallique.

10. Procédé suivant l'une des revendications précédentes, caractérisé en ce qu'il consiste à régler la pression partielle de l'hydrogène $H_2$ dans le courant de gaz porteur, du côté primaire, après la réduction de l'eau contenue dans le gaz porteur.

11. Procédé suivant l'une des revendications précédentes, caractérisé en ce qu'il consiste à envoyer le courant de gaz porteur, du côté primaire et/ou dans la région de la paroi d'échange, sur un catalyseur accélérant l'atomisation des produits de réduction.

12. Procédé suivant l'une des revendications précédentes, caractérisé en ce qu'il consiste à introduire, dans le courant de gaz porteur, du côté secondaire, de l'eau servant de substance appropriée à l'échange isotopique et dont la teneur en deutérium et/ou en tritium correspond à la teneur en deutérium et/ou en tritrium, que présente l'eau introduite dans le courant de gaz porteur du côté primaire au premier stade d'enrichissement.

13. Procédé suivant l'une des revendications précédentes, caractérisé en ce qu'il consiste à retourner en circuit fermé, à l'entrée du stade d'enrichissement, le courant de gaz porteur sortant du côté primaire de la paroi d'échange, après oxydation de l'hydrogène entraîné par gaz porteur, et après séparation de l'eau formée.

14. Procédé suivant la revendication 13, caractérisé en ce qu'il consiste à envoyer le courant de gaz porteur du côté primaire, le long d'une paroi d'échange appropriée à la perméation de l'hydrogène, et sur le côté secondaire de laquelle se trouve une substance appropriée à l'oxydation de l'hydrogène qui a permeé et à évacuer, par un autre courant de gaz porteur, les produits de réaction formés du côté secondaire.

15. Procédé suivant la revendication 13 ou 14 caractérisé en ce qu'il consiste à introduire le courant de gaz porteur exempt d'hydrogène, pour le réglage de la pression partielle d'hydrogène ($H_2$) dans le courant de gaz porteur du côté primaire, après réduction de l'eau contenue dans le gaz porteur.

16. Dispositif pour la mise en œuvre du procédé suivant la revendication 1, comprenant plusieurs étages d'enrichissement montés en série pour enrichir en deutérium et/ou en tritium une substance qui convient pour l'échange isotopique du deutérium ou du tritium et de l'hydrogène, caractérisé en ce que, dans chaque stade d'échange, un conduit d'entrée (2a, 2b) pour le gaz porteur, qui est ajouté à de l'eau contenant du deutérium et/ou du tritium, débouche dans une chambre de réaction (3, 3b), en aval de laquelle est monté un dispositif d'échange (6a, 6b) pour l'échange isotopique entre le deutérium et/ou le tritium et l'hydrogène, ce dispositif présentant au moins deux chambres d'écoulement (14a, 14b, 17a, 17b) séparées par au moins une paroi d'échange (8a, 8b) appropriée à la perméation de l'hydrogène, la chambre d'écoulement (14a, 14b) disposée du côté primaire de la paroi d'échange étant raccordée à la chambre de réduction (3a, 3b) et présentant, à sa sortie, un conduit pour le gaz résiduaire en vue de l'évacuation du gaz porteur, tandis que, dans la chambre d'écoulement (17a, 17b) disposée du côté secondaire de la paroi d'échange (8a, 8b) débouche un conduit pour le gaz porteur (16a, 16b) destiné à un courant de gaz porteur contenant en phase gazeuse la substance pour l'échange isotopique, et en ce que, à la sortie de la chambre d'écoulement (17a, 17b) du côté secondaire est raccordé un conduit pour du gaz (1b, 34) destiné au courant de gaz porteur évacuant les produits de réaction.

17. Dispositif suivant la revendication 16, caractérisé en ce que, dans le conduit pour le gaz porteur (16a, 16b) du côté secondaire, débouche un conduit pour de l'eau ou pour de la vapeur d'eau (18a, 18b).

18. Dispositif suivant la revendication 16 ou 17, caractérisé en ce que le conduit pour le gaz porteur (16a, 16b) est raccordé au conduit pour le gaz résiduaire (20a, 20b) par un régulateur de débit (22a, 22b).

19. Dispositif suivant l'une des revendications 16 à 18, caractérisé en ce que le conduit pour le gaz résiduaire (20a, 20b) débouche dans une chambre d'oxydation (7a, 7b) et le conduit d'arrivée (2a, 2b) est raccordé à la sortie de la chambre d'oxydation (7a, 7b).

20. Dispositif suivant l'une des revendications 16 à 19, caractérisé en ce qu'un conduit pour le gaz porteur (9a, 9b), avec régulateur de débit (10a, 10b) débouche dans le conduit d'entrée (2a, 2b) entre la chambre de réduction (3a, 3b) et le dispositif d'échange (6a, 6b).

21. Dispositif suivant l'une des revendications 16 à 20, caractérisé en ce que la chambre d'oxydation (7a, 7b) présente une paroi d'échange (23a, 23b) appropriée à la perméation de l'hydrogène et sur le côté secondaire de laquelle se trouve, dans une chambre (25a) pour un courant de gaz porteur, une substance appropriée à l'oxydation de l'hydrogène qui a permeé, et en ce que, à la chambre d'écoulement (25a, 25b) est raccordé un conduit d'entrée (29a, 29b) pour du gaz porteur et un conduit de sortie (30a, 30b) pour du gaz porteur évacuant les produits de réaction.

22. Dispositif suivant la revendication 21, caractérisé en ce que, dans la chambre d'écoulement (25a, 25b) est prévu un lit d'oxyde métallique (26a, 26b).

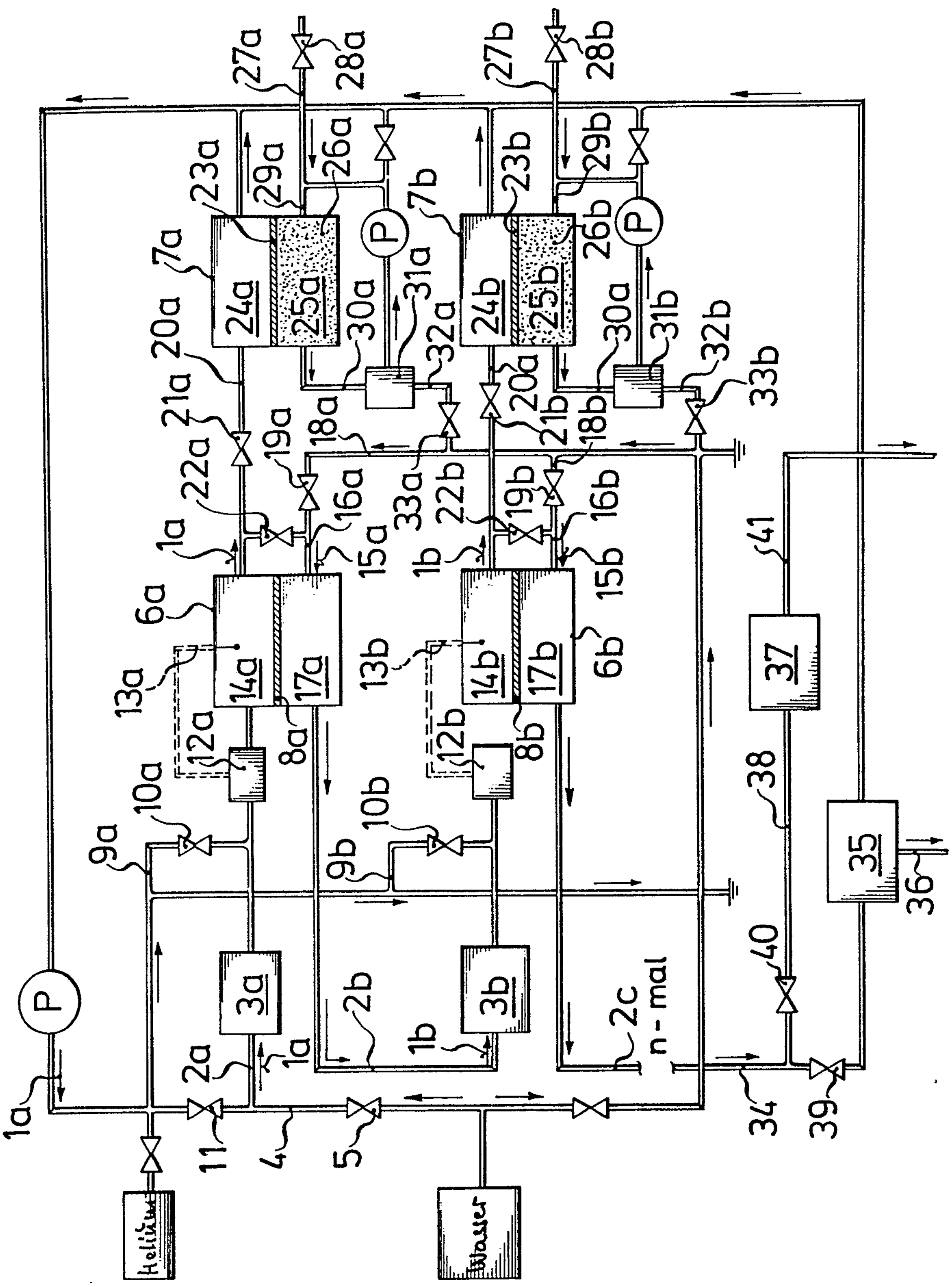

Helium
Wasser
n - mal
P
1a
1b
2a
2b
2c
3a
3b
4
5
6a
6b
7a
7b
8a
8b
9a
9b
10a
10b
11
12a
12b
13a
13b
14a
14b
15a
15b
16a
16b
17a
17b
18a
18b
19a
19b
20a
21a
21b
22a
22b
23a
23b
24a
24b
25a
25b
26a
26b
27a
27b
28a
28b
29a
29b
30a
31a
31b
32a
32b
33a
33b
34
35
36
37
38
39
40
41